# EUROPEAN PATENT APPLICATION

(11) **EP 3 065 120 A2**
(43) Date of publication of application: **07.09.2016**
(21) Application number: 16156875.3
(22) Date of filing: 23.02.2016
(51) Int. Cl.: G09F 3/03

(54) **OPTICAL SECURITY SEAL DEVICE AND INTELLIGENT TRACKING SYSTEM THEREOF**

(30) Priority: 04.03.2015 FI 20155144
(71) Applicant: Kalvotuonti I.M.P.I. Oy, 04400 Järvenpää (FI)
(72) Inventor: MÄKINEN, Petri, 04430 Järvenpää (FI); PORTIN, Jyrki, 90100 Oulu (FI)
(74) Representative: IPR Partners Ltd

(57) **Abstract**

A system for tracking and monitoring of security seals comprising: at least one electronic device (102), comprising wireless communication means (106) to at least send information towards a number of remote entities (116), a positioning system receiver (104), memory (110), and processing unit (112), said electronic device (102) comprising also a security seal device (108) providing a security seal, the electronic device (102) being further on arranged to detect the state of the security seal, and at least in case of a break in said security seal, determine the location of the security seal and send a signal representing the state and location of the security seal towards at least one remote entity (116). Corresponding security seal device is also presented.

## Description

### FIELD OF THE INVENTION

Generally the present invention concerns electronic devices in the context of authentication and security systems. Particularly, however not exclusively, the invention pertains to a security seal device and system thereof for generating and verifying security seals.

### BACKGROUND

Cargo space and container securing means presently rely mostly on mechanical solutions, such as mechanical seals. Such mechanical solutions are based on having only an unmonitored mechanical lock or at best an electronic monitoring device that tracks the mechanical seal, such as a lock, by a sensor. These solutions comprise however many shortcomings mostly due to the fact that they may often be broken with adequate effort and they are rarely traceable or even monitorable in real-time.

This is even more true since many of such sealed containers need to be moved over long distance with many different means such as intermodal freight transportation means.

Obviously, security seal solutions are needed also on other applications wherein authorization or authentication of a zone or particulars within a zone is needed. This concerns both static and moving containers, cargo spaces, depots and such.

In addition to the mechanical solutions the current solutions include also using various sensors, such as wireless tags. These solutions are however very inflexible and require a reader device or rely on near-field communication techniques. Further, some optical sealing means have been presented conceptually but they also lack in functional finesse having some shortcomings in terms of durability, usability and reliability. For example, many of them may still be opened without authorization with the use of mirrors.

Some prior art solutions are hereinafter presented.

US 2008252084 A1 discloses a system for remote monitoring of disposable security seals.

US 2011273852 A1 discloses a reusable bolt electronic seal module with GPS or cellular phone communications.

WO 2012123961 A2 discloses a remote monitoring device, which allows to collect log and location information of a sealed device.

Some other prior art solutions have been proposed in the following patent publications: EP 1063627 A2, EP 0955621 A2, WO02073561 A1, US 2012121221 A1 and US 4797547 A.

### SUMMARY OF THE INVENTION

The objective of the embodiments of the present invention is to at least alleviate one or more of the aforementioned drawbacks evident in the prior art arrangements particularly in the context of system and devices for providing and monitoring security seals. The objective is generally achieved with a system and a security seal device in accordance with the present invention.

The present solution offers an intelligent authentication and authorization system for zones or sealed spaces, which is beneficially also automatized comprising in-situ monitoring of particular security seals and remote surveillance of the states and locations of security seals.

One of the main advantages of the present invention includes that it allows for accurate and at least partially real-time monitoring of various security seals remotely, e.g. in a cloud or external (mobile) terminal. Further, in addition to being able to verify the state of a security seal the system may also pinpoint the geographical location of a tracked security seal. Also, alerting users of possible risks associated with security seals or changes in the security seal states may be given in case of actual security seal breakage or failure to connect with a device monitoring a security seal state.

This improves the reliability of the system and the security seals as well as the awareness of the users.

Another advantage of the solution is that it may be used in various different applications such as intermodal containers and shipping containers in general, cargo spaces, trailers, tanks and closed spaces in general, and any such spaces that benefit from essentially real-time monitoring, locating and alerting of a security seal. Further the system and security seal device may be implemented to existing latch and other common mechanical locking means.

Further on, the security seal location and verification may be done, or such information provided, at any location or practically any terminal or server device with suitable UI (user interface). This advantageously allows implementation of the system on (end)-user devices.

Even further, the system utilizes an improved optical security seal design. The security seal device offers a refined seal, which can withstand constant use in various applications where dirt, moisture and rough use are constantly present. The robust design of the present security seal offers essentially a simple but reliable structure that is also dirt- and waterproof. Even further, many aspects of the security seal make it optimal to be integrated with the electronic device and the system of the present solution.

Hence, the present solution allows for a high degree of automation of verifying a number of different security seal states simultaneously and in real-time. Hence many different security seal devices and users may be connected to the system at the same time.

In accordance with one aspect of the present invention a security seal device utilizable in a security seal system comprising:
- an optical loop,
- a light source arranged to emit light,
- a detector arranged to detect light emitted from said light source,
- locking means arranged to secure said optical loop without affecting functionally the light propagation through the optical loop,
characterized in that the optical loop being further arranged such that its ends are permanently connected to the security seal device structure and at least functionally connected to the light source and/or the detector forming a closed loop with connected ends, said closed loop being further openably closable by the locking means such that another closed loop is created constituting a security seal.

According to an exemplary embodiment of the present invention the optical loop is a single optical fiber. The single optical fiber may comprise conductors optionally integrated in the same outer jacket or sheath.

According to an exemplary embodiment the light source and detector may be integrated or constitute essentially one integrated structure or component. Additionally optionally the security seal device may comprise an optical splitter to enable emittance and detection of light to and from either or both directions of the optical fiber.

According to an exemplary embodiment the light source, detector or such integrated structure or component may be inside the fiber. According to another exemplary embodiment the fiber may be integrated with conductors to provide such aforementioned structures or components with electricity and loads, such as to power and optionally control them. Such conductors may be constituted as a 4-wire circuit for example.

According to an exemplary embodiment of the present invention the security seal device may comprise other cables or wires optionally forming loops essentially adjacent to the optical loop. Such structures may comprise e.g. mechanical wires and/or power cables to add to the complexity and structural integrity of the security seal from the perspective of breaking the seal. This way the security seal may be made to require more techniques associated with opening or tampering the seal without authorization such that the electronic device wouldn't notice it.

According to an exemplary embodiment of the present invention the locking of the optical loop may be done wirelessly or manually in-situ. This way the locking means may be remotely controlled.

In accordance with one aspect of the present invention a system for tracking and monitoring the security seals of the present invention comprising:
- at least one electronic device, comprising wireless communication means to at least send information towards a number of remote entities, a positioning system receiver, memory, and processing unit,
- said electronic device comprising also a security seal device providing a security seal,
the electronic device being further on arranged to detect the state of the security seal, and at least in case of a break in said security seal, determine the location of the security seal and send a signal representing the state and location of the security seal towards at least one remote entity.

According to an exemplary embodiment of the present invention the signal representing the broken state of the security seal is sent essentially immediately as a communications network is or becomes available. The electronic device comprising the communication means to send the signal may utilize various different communications networks and send the signal as soon as said device is in the coverage of communications networks, such as a telecommunications network.

According to an exemplary embodiment of the present invention the electronic device may utilize various positioning systems to pinpoint its location with sufficient accuracy.

According to an exemplary embodiment of the present invention the system comprises at least one remote entity arranged to receive information, such as the location of the electronic device and the state of its security seal. Additionally optionally the remote entity may be arranged to send information towards the electronic devices, such as code, commands, configuration or control parameters. One feasible example of such information is the command to either close or open the seal, such as by controlling a lock associated with the security seal.

According to another exemplary embodiment of the present invention the remote entity may comprise means to at least process information and optionally display or otherwise interface with a user or device. This allows for inter alia users of the system to track and locate graphically the various security seals and monitor their states. The system may provide such information directly to a user via e.g. web application, mobile application utilizing GUIs (graphical user interfaces), or APIs (application programming interfaces) to be provided for and used on another device, such as a mobile device or such terminal.

According to an exemplary embodiment of the present invention the system uses the location tracking and security seal state monitoring information to notify and alert users. For example, a user may be alerted when the security seal of one of the electronic devices is broken or when the electronic device may not be connected with or is otherwise out of range. Additionally, any other anomalies such as possible error in the received information or inaccuracy in some information may be notified to a user.

Overall, the system allows for remote tracking of the locations and monitoring the states of a number of electronic devices each comprising a security seal. Such information may be used to provide any number of feasible notifications to users or devices in essentially real-time or in a preferred frequency. Further, the states and locations may be externally visualized on a terminal device utilizing the system via e.g. cloud service to be used remotely and wirelessly. This way security seals may be tracked actively or passively by the users since the system notifies the users or devices of any changes, irregularities of predetermined states of the security seals that the users or devices are affiliated or authenticated to track and monitor.

As briefly reviewed hereinbefore, the utility of the different aspects of the present invention arises from a plurality of issues depending on each particular embodiment.

The expression "a number of" may herein refer to any positive integer starting from one (1). The expression "a plurality of" may refer to any positive integer starting from two (2), respectively.

The term "exemplary" refers herein to an example or example-like feature, not the sole or only preferable option.

Different embodiments of the present invention are also disclosed in the attached dependent claims.

### BRIEF DESCRIPTION OF THE RELATED DRAWINGS

Next, some exemplary embodiments of the present invention are reviewed more closely with reference to the attached drawings, wherein
Fig. 1 illustrates a system and some associated aspects thereof in accordance with the present invention.
Fig. 2 illustrates an example of a prior art optical seal solution.
Fig. 3a-3b illustrate embodiments of a security seal device in accordance with the present invention.
Fig. 4a-4b illustrate other embodiments of a security seal device in accordance with the present invention.
Fig. 5 illustrates yet another embodiment of a security seal device in accordance with the present invention.

### DETAILED DESCRIPTION OF THE EMBODIMENTS

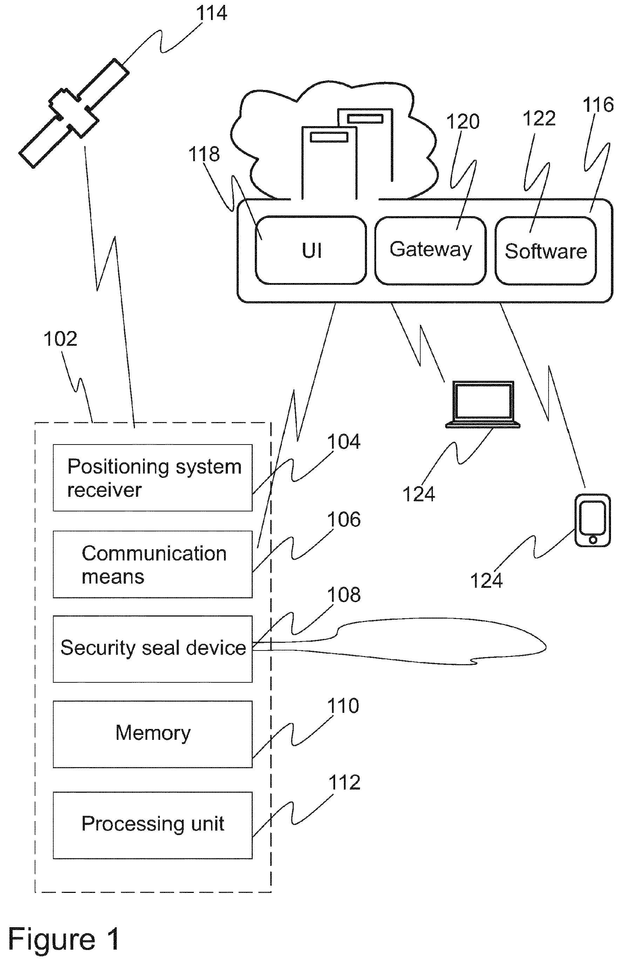

Figure 1 illustrates one feasible embodiment of a system in accordance with the present invention.

The system essentially comprises at least one electronic device 102 comprising a positioning system receiver 104, communication means 106, security seal device 108, memory 110 and a processing unit 112. Additionally the system comprises a remote entity 116 such as a cloud server or other remote server.

The positioning system means utilized by the electronic device 102 may comprise utilization of different positioning systems 114 for determining the location of the electronic device 102. Such feasible positioning systems 114 comprise e.g. GPS, A-GPS, GLONASS, GNSS, IRNSS, SBAS and BeiDou positioning technologies. The electronic device 102 comprises at least a receiver 104 that may utilize one or more of the positioning systems 114 to pinpoint its and consequently the electronic device's 102 location with predetermined sufficient accuracy. The receiver 104 may be essentially a chip, antenna or other such module, which are widely known in the state of art. The receiver may also be a "navigation device", which however may but needn't necessarily comprise navigation, guiding or map visualization means.

The communication means 106 may comprise at least a transmitter, and optionally a receiver as well. Further the communication means may comprise a transceiver, such as that the transmitter and receiver are functionally connected, integrated or essentially a single module or device. The communication means is arranged to at least being able to use communications networks, such as telecommunication networks, to send information such as the electronic device's 102 location and security seal state information towards a remote entity 116. In other words the communication needn't be able to connect with a remote entity but at least be able to send information towards it. Optionally communication means may be arranged to receive information such as code, commands, configuration or control parameters. Such information may e.g. comprise device configuration parameters and commands and lock control commands allowing for wireless external remote control of the security seal locking and opening. Such information may also comprise inquiries of the security seal state and electronic device location by the system, i.e. the remote entity 116 or by a user, optionally made essentially directly by a user's device 124.

Further on, the communication means 106 preferably utilizes wireless communications networks technologies such as wireless telephone networks means or computer networks means. One preferred option is to use GSM means for sending information to the remote entity. Other feasible means comprise WiFi, Zigbee, EDGE, GPRS, 3G, 4G and even 5G technologies. Obviously, as is also known in the state of art various technologies may be utilized essentially concurrently as various transmitters are capable to switch between the communications means e.g. in accordance to coverage and availability of networks and base stations. Additionally, the communication means 106 may utilize SMS and/or MMS techniques for sending information to a remote server or other devices, such as mobile devices and/or terminals.

As previously described, the communication means 106 is used to send the signal or information comprising at least the location and/or the security seal state of the electronic device 102 towards a remote entity 116. The mentioned transmittance may be done in temporal intervals, essentially real-time, when a change in security seal state or location happens and/or as soon as the electronic device 102 is in coverage of network that it can utilize to send the information. A change in the security seal state (e.g. in case of tampering) should be always informed to the remote entity but also location changes, such as if the security seal arrives to a location where it should not be is detected, may be useful information to the system and its users. Many times the route of a security sealed package, container or such is predetermined and deviating from the route, as well as the location on a desired route, may hence be information that the users and owners of the package may also be interested at, in addition to the state of the security seal.

The electronic device 102 may not always be in the coverage area of suitable telecommunications networks, which means that changes in the security seal state and location that should be notified to the system must then be stored and sent towards the remote entity 116 as soon as a suitable communications network coverage is available.

The security seal device 108 is preferably an optical security seal device such as will be described hereinafter. Other security seal devices, such as mechanical and/or electric seal devices, suitable for remote tracking and monitoring may additionally be utilized.

The memory 110 may be divided between one or more physical memory chips and/or cards. The memory 110 may also comprise necessary code, e.g. in a form of a computer program/application, for enabling the control and operation of the device 102 and/or security seal device 108, and provision of the related control or monitored data. The memory may comprise e.g. ROM (read only memory) or RAM-type (random access memory) implementations as disk storage or flash storage. The memory 110 may further comprise an advantageously detachable memory card/stick or a fixed/removable hard drive. The memory 110 may be an essentially independent component or device or it may be comprised in any of the devices and/or components of the electronic device 102.

The memory 110 is preferably used to at least store the location and security seal state information whenever they are determined by the electronic device 102. This way such information may be stored even when there isn't communications networks coverage to send the information towards another device or remote entity. Additionally, such information may be logged to the memory 110 into logfile(s). The memory 108 may be accessed by the processing unit 112 and/or the remote entity 116.

The processing unit 112 comprises a computing entity. The processing unit 112 comprises, e.g. at least one processing/controlling unit such as a microprocessor, a digital signal processor (DSP), a digital signal controller (DSC), a micro-controller or programmable logic chip(s), optionally comprising a plurality of co-operating or parallel (sub-)units. The processing entity may be arranged to control the electronic device 102 or parts thereof.

Optionally the electronic device 102 may also utilize essentially near area communication technologies such as Bluetooth or Bluetooth low energy, EPC, ANT+, NFC, QR, RFID, QR and UCODE. Communication techniques utilizing said technologies are already widely used in the context of containers and shipping applications of the like. These techniques may also be utilized in the electronic device 102 for authentication or authorization as well as information reading purposes (reading security seal metadata or other data, such as date of sealing, owner, destined location, etc.). Additionally, these communication techniques may be used to open and/or close the security seal.

The remote entity 116 comprises an Internet or cloud service on a remote server or cloud server. Further, the remote entity 116 may comprise a gateway 120, such as a GSM or other suitable network gateway, allowing the notifications and other information to be sent towards the user devices 124 via cellular networks or computer networks. The visualization of the map and other functions may be done e.g. using a mobile app or web application provided on the device 124 optionally as a software as a service (SaaS). The primary system software 122 is on the remote entity or used thereof.

Further on, the remote entity preferably comprises or at least stores part of the software 122 associated with the system functions and/or the user device 124 utilized applications. Also, the remote entity may comprise a number of UIs (user interfaces), such as GUIs or APIs for software 122 and/or data provision associated with the system.

Further on, in addition to monitoring the electronic devices 102 the remote entity 116 may be used to control a number of the electronic devices e.g. for automation of the control or initiation of any preferred processes and/or controlling the locking of the security seal.

Some exemplary applications wherein the electronic device may be applied to comprise intermodal containers and shipping containers in general, cargo spaces, trailers, and any such spaces that benefit from essentially real-time monitoring, locating and alerting of a security sealed locking.

An example of a use case for the system would be sealing an intermodal container and monitoring its seal state and location as it ships between the sending location (where it is sealed) and the destination location where an authorized person is allowed to open the security seal. The container is sealed after loading, which sealing may be done remotely essentially automatically (or in response to a user initiated command) or manually in-situ. The container is then shipped and the system monitors the electronic device location and its security seal state so that it is certain that the seal is unbroken and untampered, and optionally that the electronic device (and consequentially the container in which it is attached) is on the predetermined path or allowed location. Correspondingly to the initial state wherein the security seal is created upon arriving to its predetermined destination the opening of the seal may be done remotely essentially automatically (or in response to a user initiated command) or manually in-situ by an authorized person. In a case the security seal is broken or tampered with the electronic device communicates its location and the state of the security seal to the remote entity, which may further take such actions as to notify users etc. as discussed hereinbefore. Also, the system might try to initiate connection with an electronic device or report if any notification from the electronic device is not received (indicating that it the whole device may be broken or outside of range). As also discussed hereinbefore users may be notified also from various other changes in the state of the electronic device security seal or location. Users may be also presented the information and notifications to their mobile devices and terminals or directly on the remote entity, as visualized information of the electronic device state and location on a map (of the last recorded location and/or state). Obviously, as multiple electronic devices providing seals for different containers, cargo spaces, trailers and such, may be used in the system simultaneously, the system may cover a large variety of security seal applications and users and devices.

As mentioned hereinbefore in many occasions the system allows for large scale utilization of a number of electronic devices providing security seals that may further on be monitored essentially real-time automatically by the system and the users. It should be noted also that even though most examples presented hereinbefore constitute essentially such applications wherein the sealed container or such is moved, the system and its parts are no way limited to such dynamic applications and applications wherein the location of the sealed object doesn't essentially change are very well applicable to the system.

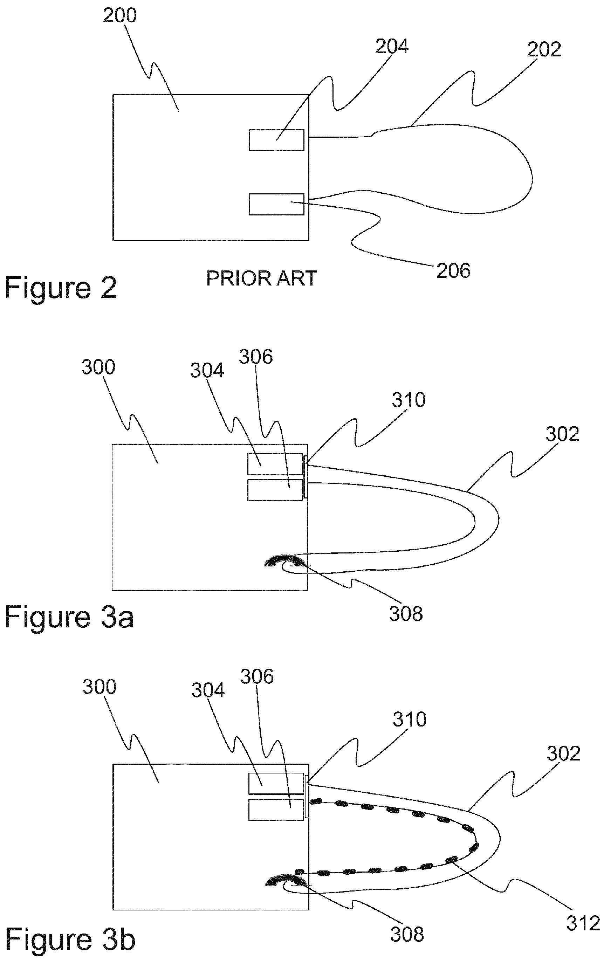

Figure 2 illustrates a prior art solution of an optical security seal device 200.

A typical prior art solution of an optical security seal device 200 comprises an emitter 204 and a detector 206 and an optical loop 202 connected in between them. The optical loop 202 forms a single loop around the sealed mechanism such as a latch or a lock. The optical loop 202 is opened and closed by opening at least one of the two connected ends. In some solutions the optical loop 202 is opened by cutting or otherwise breaking it, wherein the optical loop 202 has to be replaced by a new one, which also again requires opening at least one of the two connected ends. These actions leave the optical loop 202 as well as the connections in the device body wherein the optical loop ends are connected, exposed to dirt, particles and humidity. Further on, as the structure of the loop 202 is such that it may be opened from either end it makes the loop prone to tricking the system by mirrors inherently leaving the security seal vulnerable to tampering. Moreover, the optical loop 202 of such solutions often comprises a plurality of optical fibers.

Fig. 3a-3b illustrate embodiments of a security seal device 300 in accordance with the present invention.

The security seal device 300 comprises at least an optical loop 302, a light source 304, a detector 306 and locking means 308. Additionally the security seal device 300 preferably comprises connection and sealing means 310 for connecting and sealing the ends of the optical loop 302.

The optical loop 302 preferably comprises a single optical fiber or a single optical fiber cable. The mode-number of the fiber as well as the core and/or cladding layers may be chosen in accordance to application requirements or manufacturing specifications. The fiber may comprise a number of jackets such as to allow for suitable flexibility, strength, abrasion and protection properties.

The light source 304 preferably comprises a suitable device or component for emitting light into and via the optical loop 302. The light source 304 may comprise for example a number of LEDs (Light-Emitting Diode), OLEDs (Organic Light Emitting Diode) or suitable lasers. The light from the light source 304 may be modulated or pulsed, and its intensity may be varied.

The detector 306 comprises a device or component suitable for detecting light emitted from the light source 304 and via the optical loop 302. The detector 306 may for example be a photodetector or an optical transistor.

The light source 304 and the detector 306 may obviously be in either of the optical loop ends (and may switch places in accordance to the locations depicted in the drawings). Preferably the light source 304 and the detector 306 are close to each other such that the optical loop 302 ends are close to each other forming a narrow closed loop whose length may obviously be chosen in accordance to the application requirement, i.e. the size of the security seal, etc.

Further on, the light source 304 and detector 306 may essentially be integrated into one device or constitute a single emitter-detector component with both light emitting and detecting functions.

The locking means 308 may comprise a mechanical lock. Said locking means 308 may be controlled remotely, optionally automatically, or manually in-situ to open and close the locking means 308. The locking means 308 secures the optical loop 302 structure to the security seal device 300 structure forming the another closed loop and essentially forming the closed security seal. The locking means 308 locks the optical loop 302 preferably so that the optical functions of the loop, i.a, the light propagation through the optical loop 302, are not affected. The locking means 308 locks the optical loop 302 preferably so around the optical loop such that the optical loop mechanical integrity of its cladding and core aren't broken or at least intentionally damaged (wear may still be caused by continuous use, which is essentially inevitable). The locking means 308 may be inside the security seal device 300 structure, such as inside the casing of the device 300, or outside, such as on the surface of the device 300 casing, structure. The locking means 308 may comprise means to connect e.g. wires or conductors.

The optical loop 302 is formed such that its ends are attached essentially permanently to the security seal device 300 structure. The ends are attached to the structure such that there preferably exists a sealing and connection means 310 wherein the ends are connected protecting the ends and the core of the fiber from humidity, dirt and such. Further on, the light source 304 and/or the detector 306 are at least functionally connected with at least one of the ends of the optical loop 302. The ends of the optical loop 302 may be essentially irremovably fixed to the device 300 structure and/or to the connection and sealing means 310 as the ends are not required to be open in the functional operation of the security seal, i.e. opening and closing the security seal. As mentioned hereinbefore, the opening and closing of the actual seal (second loop) around or through hasps or the like is done with the locking means 308. The first closed loop of the optical loop 302 is never opened and the optical connection remains closed since the optical loop ends are permanently fixed. Only in case of tampering are the first loop broken/opened and/or the permanently connected ends disconnected from the security seal device structure of the present invention.

The optical loop 302 may also comprise electrical conductors or wires integrated to the optical loop 302. Such integrated conductor structure 312 may form e.g. a 4-wire or 2-wire circuit in the optical loop 302 structure. The conductors may be integrated such that they share an outer jacket or sheath with the optical loop 302 essentially forming a single cable structure. The conductors itself may be used to transmit electrical current of digital signals to and from any of the device and/or components of the security seal device 300. Optionally the conductors may form a security seal structure themselves in addition to the optical security seal 300 structure. Such structure may cause a change in the security seal state or a corresponding alert if any of the conductors is broken or connected with by an outer object, such as a forced tool or the like through the outer jacket of the optical loop 302 structure. This structure may be used to increase the complexity of the structure from the viewpoint of trying to open or break the security seal without authorization since an optical loop 302 comprising both optical and electric properties requires more means for getting around the security seal unnoticed (without causing a change in the security seal state). Obviously, if conductors are used complementary components for closing and/or controlling such circuits are implemented, such as suitable power source(s), computing circuit and other such well known means for closing the circuit.

As depicted in figures, the essential parts of the security seal device 300 are preferably comprised as one device that houses them. Hence no additional parts or host devices are mandatory and the device 300 may constitute a standalone device.

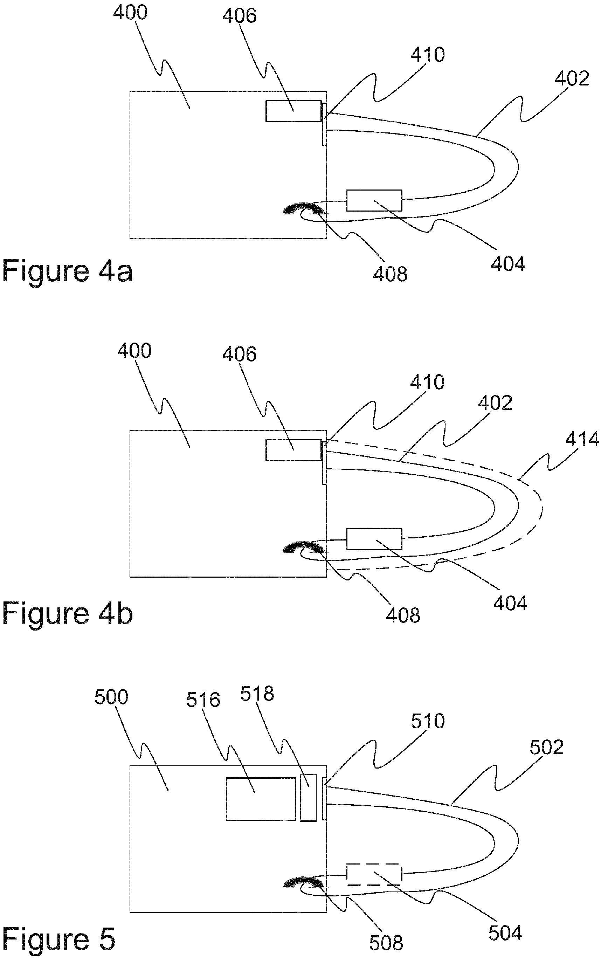

Fig. 4a-4b illustrate other embodiments of a security seal device 400 in accordance with the present invention.

The security seal device 400 at least an optical loop 402, a light source 404, a detector 406 and locking means 408. Additionally the security seal device 400 preferably comprises connection and sealing means 410 for connecting and sealing the ends of the optical loop 402. To these aspects, very much the same principal considerations that were made in description of the embodiments of the figs. 3a-3b apply.

However, herein the light source 404 is comprised inside the optical loop 402. The light source 404 preferably emits light in both directions in accordance to some predetermined logic, which light the detector 406 preferably functionally connected to both ends of the optical loop 402 receives and detects. Optionally, the detector 406 could be also in the optical loop 402 (and the light source 404 in the device 400 structure) or together with the light source 404 in the optical loop 402 as a single or integrated device or component. Again, also the device or component functionally connected to the optical loop 402 could also comprise a single or integrated device or component.

A signal may be sent to either of the optical loop 402 directions essentially simultaneously or in turns or intervals. For example, a signal could be sent to either of the directions which is received and detected after which another signal, such as a confirmation of "OK", is sent back via the optical loop 402.

Additionally, the security seal 400 may comprise mechanical or electrical wire 414 in addition to the optical loop for improving the security properties of the security seal (making it more complex for an unauthorized person to open). Optionally such wire(s) may comprise power cable for transmitting power e.g. to the light source 404 and/or detector 406 integrated to or in the optical loop 402 structure.

If an outer power cable is not used, a preferred way to control and conduct electricity to the light source 404 and/or detector 406 integrated to or in the optical loop 402 is to utilize the integrated conductor structure (such as the 4-wire circuit) discussed in more detail hereinbefore.

Fig. 5 illustrates yet another embodiment of a security seal device 500 in accordance with the present invention.

The security seal device 500 at least an optical loop 502, integrated or single device/component light source-detector 516 and locking means 508. Additionally the security seal device 500 preferably comprises connection and sealing means 510 for connecting and sealing the ends of the optical loop 502. To these aspects, very much the same principal considerations that were made in description of the embodiments of the figs. 3a-3b and fig. 4a-4b apply.

Herein, a splitter 518 is used to control in which direction the light is emitted and from which direction it is received. Obviously one device or integrated structure with both emitting and detecting means may be used to send the light to other direction and receive it from the other or two or more devices may be used. Obviously, again other or even a third integrated or single component structure 504 may be integrated to or in some point of the optical loop 502.

The security seal device of any of the presented embodiments may also utilize additional elements. These elements may be for example complementary elements for the other entities and components. As an example, such components may comprise light-emitting components or sound-emitting and or sound-receiving such as microphones and speakers, power source(s), display(s), conductors, wires, fastening means and encasing(s). As being appreciated by skilled readers, the configuration of the disclosed components may differ from the explicitly depicted one depending on the requirements of each intended use scenario and selected technologies, wherein the present invention may be capitalized.

The scope of the invention is determined by the attached claims together with the equivalents thereof. The skilled persons will again appreciate the fact that the disclosed embodiments were constructed for illustrative purposes only, and the innovative fulcrum reviewed herein will cover further embodiments, embodiment combinations, variations and equivalents that better suit each particular use case of the invention.

## Claims

1. A security seal device (300), (400), (500) utilizable in a security seal system comprising:
- an optical loop (302), (402), (502),
- a light source (304), (404), (504) arranged to emit light,
- a detector (306), (406), (506) arranged to detect light emitted from said light source (304), (404), (504),
- locking means (308), (408), (508) arranged to secure said optical loop (302), (402), (502) without affecting functionally the light propagation through the optical loop (302), (402), (502),
**characterized in that** the optical loop (302), (402), (502) is further arranged such that its ends are permanently connected to the security seal device (300), (400), (500) structure and at least functionally connected to the light source (304), (404), (504) and/or the detector (306), (406), (506) forming a closed loop with connected ends, said closed loop being further openably closable and openable by the locking means (308), (408), (508) such that another closed loop is created said another closed loop constituting a security seal.

2. The device of claim 1 wherein the optical loop (302), (402), (502) comprises a single optical fiber.

3. The device of any of claims 1-2 wherein the light source (304), (404), (504) and detector (306), (406), (506) are integrated as at least one integrated unit.

4. The device of any of claims 1-3 wherein the light source (304), (404), (504) and detector (306), (406), (506) constitute a single emitter-detector component.

5. The device of claim 1-4 comprising at least two light sources (304), (404), (504), detectors (306), (406), (506), integrated units and/or single emitter-detector components.

6. The device of any of claims 1-5 wherein light source (304), (404), (504), detector (306), (406), (506) or such integrated structure or component is inside the fiber.

7. The device of any of claims 1-6 comprising a wire and/or a power cable (414) along with the optical loop (302), (402), (502).

8. The device of any of claims 1-7 comprising at least one conductor (312), optionally a 4-wire circuit, integrated together with the optical loop (302), (402), (502).

9. The device of any of claims 1-8 comprising an optical splitter for enabling bidirectional use of the optical loop (302), (402), (502).

10. A system for tracking and monitoring the security seals of claim 1 comprising:
- at least one electronic device (102), comprising wireless communication means (106) to at least send information towards a number of remote entities (116), a positioning system receiver (104), memory (110), and processing unit (112),
- said electronic device (102) comprising also the security seal device (108) providing a security seal,
the electronic device (102) being further on arranged to detect the state of the security seal, and at least in case of a break in said security seal, determine the location of the security seal and send a signal representing the state and location of the security seal towards at least one remote entity (116).

11. The system according to claim 10, wherein the signal representing the broken state of the security seal is sent essentially immediately a communications network is available.

12. The system according to any of claims 10-11, comprising wireless telecommunication means such as GSM communication means for sending the signal via a wireless communication network.

13. The system according to any of claims 10-12, wherein the remote entity (116) sends or forwards a signal to a device or a user (124) when the security seal is broken.

14. The system according to any of claims 10-13, wherein the remote entity (116) sends or forwards a signal to a device or a user (124) when the electronic device (102) cannot be connected with.

15. The system according to any of claims 10-14, wherein the signal representing the state and location of the security seal may be translated into a graphical representation, such as the security seal located on a map, by the remote entity (116).
